# FASCICULE DE BREVET EUROPEEN

(11) **EP 3 388 654 B1**
(45) Date de publication et mention de la délivrance du brevet: **13.05.2020**
(21) Numéro de dépôt: 18163120.1
(22) Date de dépôt: 21.03.2018
(51) Int. Cl.: F02D 41/02, F01N 3/08

(54) **PROCÉDÉ DE COMMANDE DE MODES DE COMBUSTION DE MOTEUR THERMIQUE**
STEUERVERFAHREN DER VERBRENNUNGSMODI EINES WÄRMEKRAFTMOTORS
METHOD FOR CONTROLLING COMBUSTION MODES OF A HEAT ENGINE

(30) Priorité: 11.04.2017 FR 1753147
(43) Date de publication de la demande: 17.10.2018
(73) Titulaire: PSA Automobiles SA, 78300 Poissy (FR)
(72) Inventeur: FURIO VIZCAINO, Javier, 94300 Vincennes (FR); BAILLON, Frédéric, 78800 Houilles (FR)

(56) Documents cités:
- WO-A1-2014/199044
- WO-A1-2016/083691
- GB-A- 2 500 925
- US-A1- 2012 285 139
- US-A1- 2013 025 262
- US-A1- 2013 213 008

## Description

La présente invention se situe dans le domaine de la dépollution des gaz d'échappement d'un moteur à combustion interne. Plus précisément, l'invention porte sur un procédé de commande global de modes de combustion permettant une purge d'un catalyseur d'oxydation et une régénération d'un filtre à particules équipant une ligne d'échappement.

L'invention vise à mettre en place dans le contrôle moteur, un superviseur commun des composants d'une ligne d'échappement de moteur diesel qui sont dédiés, d'une part, à l'oxydation des imbrûlés par un catalyseur d'oxydation (ou "DOC" pour "Diesel Oxidation Catalyst" en anglais), et d'autre part, à la filtration de particules ou suies par un filtre à particules. L'objectif de ce superviseur est donc de commander les modes de combustion qui permettent de purger ces deux composants quand ceux-ci atteignent un niveau important de stockage de polluants.

US 2013/213008 A1 décrit un moteur Diesel équipé d'un catalyseur d'oxydation en amont d'un filtre à particules dans lequel les niveaux de charge en soufre et en hydrocarbures du catalyseur d'oxydation sont estimés pour déclencher une purge.

GB 2 500 925 A divulgue un ensemble moteur Diesel équipé d'un dispositif de piège à NOx en amont d'un filtre à particules dans lequel des procédés de désulfuration du piège à NOx et de régénération du filtre à particules peuvent être effectués seuls ou simultanément.

Dans les pays d'exportation exotiques comme par exemple le Mexique, la Russie, où la Chine, dans lesquels les caractéristiques du carburant combinées aux conditions extérieures extrêmes (altitude, grand froid) font que les émissions d'hydrocarbures imbrûlés (HC) ainsi que celles d'oxydes de soufre (SOx) sont beaucoup plus importantes par rapport aux conditions de fonctionnement des véhicules en Europe. Le stockage de ces polluants encrasse le catalyseur d'oxydation, ce qui provoque une perte des propriétés de celui-ci ainsi que des émissions de fumées blanches lorsque la charge en soufre est élevée.

Afin d'éviter ces problèmes, il a été envisagé d'adapter le réglage de calibration du superviseur du filtre à particules afin de déclencher simultanément une régénération du filtre à particules et une purge du catalyseur. Toutefois, le risque d'une telle solution est de ne pas maîtriser la fréquence des régénérations du filtre à particules et des purges du catalyseur. En effet, cela peut engendrer une dilution importante de gazole dans l'huile du moteur dans le cas d'une fréquence de régénérations/purges trop élevée, ou un empoisonnement du catalyseur d'oxydation et une surcharge du filtre à particules dans le cas d'une fréquence des régénérations/purges trop basse. En outre, dans ce cas, il existe des risques de colmatage du filtre à particules (risque d'incendie du filtre à particules), et/ou d'émissions élevées d'hydrocarbures imbrûlés (HC, CO), et de fumées blanches en sortie d'échappement.

L'invention vise à remédier efficacement à ces inconvénients en proposant un procédé de commande global de modes de combustion d'un moteur thermique, notamment de véhicule automobile, permettant une purge en soufre, ou en hydrocarbures d'un catalyseur d'oxydation et une régénération d'un filtre à particules équipant une ligne d'échappement du moteur thermique, comportant :
- une étape d'estimation d'une charge en soufre dans le catalyseur d'oxydation,
- une étape d'estimation d'une charge d'hydrocarbures dans le catalyseur d'oxydation,
- une étape d'estimation d'une charge en suies du filtre à particules,
- une étape de détermination de critères annexes relatifs à l'évaluation d'événements de conduite,
- une étape de comparaison de la charge en soufre et en hydrocarbures dans le catalyseur d'oxydation, de la charge en suies du filtre à particules, et des critères annexes par rapport à une pluralité de règles de décision, chaque règle de décision comportant une pluralité de seuils associés respectivement à la charge en soufre, et en hydrocarbures dans le catalyseur d'oxydation, à la charge en suies du filtre à particules, et aux critères annexes relatifs l'évaluation d'événement de conduite, et
- une étape de réalisation, par sélection d'un mode de combustion adapté du moteur thermique, de la régénération du filtre à particules, de la de purge ou de la purge en hydrocarbures du catalyseur d'oxydation en fonction de la règle de décision vérifiée,
   caractérisé en ce que les règles de décisions sont ordonnées, la première règle vérifiée selon l'ordre est retenue et appliquée, et les règles visent selon leur ordre croissant,
- une purge en hydrocarbures suivie d'une régénération du filtre à particules avec une purge en soufre du catalyseur,
- une purge en soufre du catalyseur d'oxydation réalisée de façon synchronisée avec la régénération du filtre à particules, et
- une purge en soufre seulement, une purge en hydrocarbures seulement, une régénération du filtre à particules seulement.

L'invention permet ainsi de synthétiser dans le même superviseur les besoins de régénérations du filtre à particules et de purges du catalyseur d'oxydation. Cela permet de synchroniser au maximum les purges du catalyseur d'oxydation avec les régénérations du filtre à particules afin de réaliser ces deux opérations lors d'un même évènement. Par ailleurs, l'invention permet de minimiser la dilution du gazole dans l'huile pour garantir des intervalles de vidange minimum.

Selon une mise en œuvre, l'estimation de la charge en soufre dans le catalyseur d'oxydation est réalisée d'une part via un modèle d'émissions en soufre dépendant d'une consommation de carburant et d'une consommation d'huile moteur, et d'autre part via un modèle de désorption de soufre du catalyseur d'oxydation dépendant de la température, d'un vieillissement du catalyseur d'oxydation, d'un chargement courant en soufre, ainsi que d'un débit des gaz à l'échappement qui traversent le catalyseur d'oxydation.

Selon une mise en œuvre, l'estimation de la charge d'hydrocarbures dans le catalyseur d'oxydation est réalisée via un modèle kilométrique pondéré par des conditions à l'extérieur du véhicule, telles qu'une température extérieure et une pression atmosphérique, ainsi que par un vieillissement du catalyseur d'oxydation.

Selon une mise en œuvre, l'estimation de la charge en suies du filtre à particules est réalisée via une richesse estimée dans des cylindres du moteur thermique, un débit des gaz d'échappement et une contrepression mesurée à des bornes du filtre à particules.

Selon une mise en œuvre, les critères annexes relatifs à l'évaluation d'événements de conduite sont choisis parmi les critères suivants: une durée de purge du catalyseur d'oxydation et une durée de régénération du filtre à particules, une efficacité de la purge du catalyseur d'oxydation et une efficacité de la régénération du filtre à particules, une dilution de carburant dans l'huile associée, une surconsommation, un critère de roulage permettant d'identifier les conditions optimales pour le déclenchement de la purge du catalyseur d'oxydation et/ou la régénération du filtre à particules, des distances parcourues depuis le dernier événement de la purge du catalyseur d'oxydation et de la régénération du filtre à particules.

L'invention a également pour objet un superviseur commun de filtre à particules et de catalyseur d'oxydation comportant une mémoire stockant des instructions logicielles pour la mise en œuvre des étapes du procédé de commande de modes de combustion d'un moteur thermique permettant une purge en soufre ou en hydrocarbures d'un catalyseur d'oxydation, une régénération d'un filtre à particules tel que précédemment défini.

L'invention a également pour objet un ensemble moteur comprenant un moteur thermique équipé d'une ligne d'échappement comportant un catalyseur d'oxydation et un filtre à particules avec un tel superviseur commun.

L'invention a également pour objet un véhicule automobile avec un tel ensemble moteur.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'une architecture d'une ligne d'échappement d'un moteur thermique mettant en œuvre le procédé selon la présente invention;

La figure 2 est une représentation schématique illustrant la détermination d'un débit de chargement de soufre dans un catalyseur d'oxydation à partir d'un débit de soufre en amont et d'un débit de soufre en aval du catalyseur;

La figure 3 est une représentation schématique d'un superviseur commun recevant des informations issues de modules fonctionnels du moteur et des composants de la ligne d'échappement pour la mise en œuvre du procédé selon l'invention;

La figure 4 est une représentation schématique illustrant les règles de décision gérées par le superviseur commun de la figure 3 permettant le déclenchement et l'arrêt des purges du catalyseur et des régénérations du filtre à particules;

La figure 5a est une représentation graphique illustrant la distance kilométrique entre des régénérations du filtre à particules et des purges du catalyseur d'oxydation qui sont synchronisées;

La figure 5b est une représentation de graphiques illustrant un exemple de déclenchement de différents modes de combustion par le superviseur de la figure 3 lors d'une simulation de roulage;

La figure 6 est un diagramme fonctionnel des différentes étapes du procédé selon l'invention de commande de modes de combustion d'un moteur thermique permettant une purge d'un catalyseur d'oxydation et une régénération d'un filtre à particules.

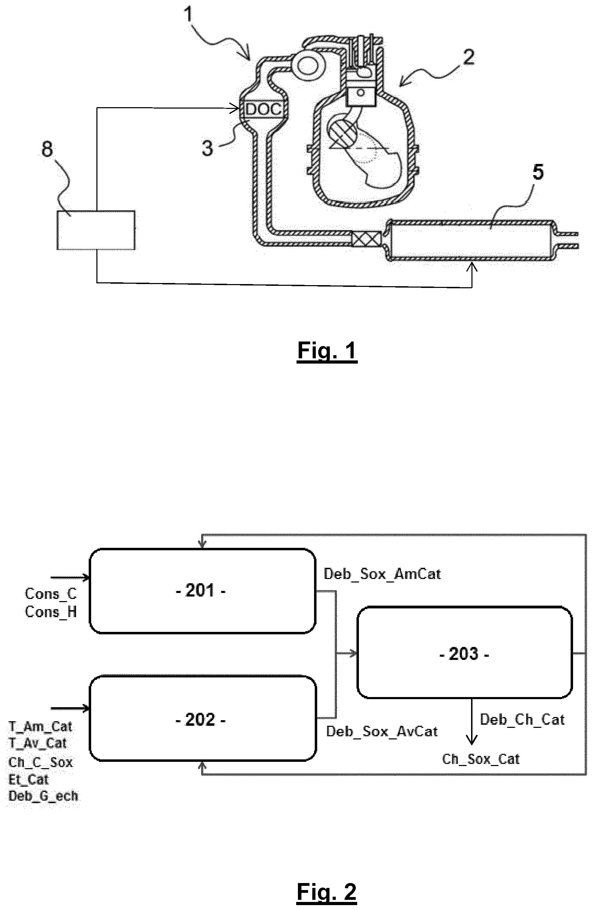

La figure 1 représente une ligne d'échappement 1 d'un moteur thermique 2 sur laquelle sont implantés de façon connue en soi un catalyseur d'oxydation diesel 3 (ou "DOC" pour "Diesel Oxidation Catalyst" en anglais) permettant l'oxydation d'hydrocarbures et de monoxyde de carbone en dioxyde de carbone et en eau; ainsi qu'un filtre à particules 5 permettant, à l'aide d'une matrice céramique poreuse, de piéger les suies des gaz d'échappement. On précise également qu'un catalyseur de système de réduction sélective catalytique (ou "SCR" pour "Selective Catalytic Reduction" en anglais) associé à un injecteur d'agent réducteur à base d'urée pourra être intégré à un bloc de dépollution contenant le filtre à particules 5.

Un superviseur commun 8 assure la commande du catalyseur d'oxydation 3 ainsi que du filtre à particules 5. A cet effet, le superviseur 8 comporte une mémoire stockant des instructions logicielles pour la mise en œuvre des étapes du procédé selon l'invention décrit plus en détails ci-après.

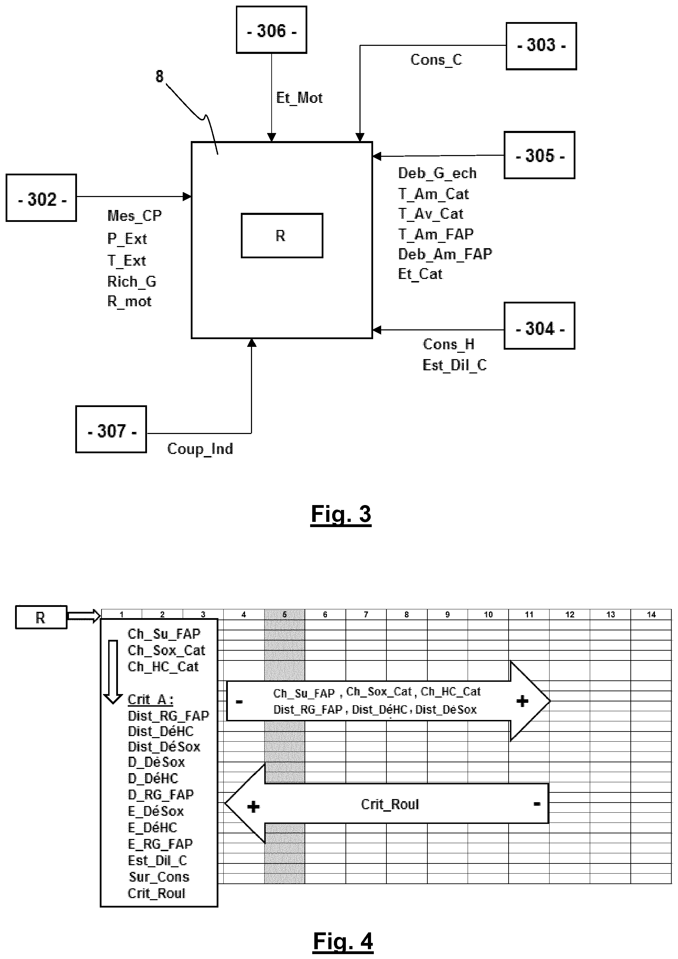

Comme cela est illustré sur la figure 3, le superviseur commun 8 consomme des informations provenant de la chaine de traitement 302, notamment la mesure de la contrepression Mes_CP du filtre à particules 5, la pression et la température extérieure P_Ext, T_Ext, la richesse des gaz Rich_G mesurée par une sonde de mesure des oxydes d'azote (NOx), et le régime moteur R_mot.

Par ailleurs, le module de combustion 303 fournit la consommation de carburant du véhicule Cons_C. La fonction de maintenance adaptative 304 fournit la consommation d'huile du moteur Cons_H, et l'estimation du ratio de dilution du gazole dans le moteur Est_Dil_C.

La fonction boucle d'air 305 fournit le débit des gaz à l'échappement Deb_G_ech, la température en amont et en aval T_Am_Cat, T_Av_Cat du catalyseur 3, la température en amont T_Am_FAP du filtre à particules 5, le débit volumique en amont Deb_Am_FAP du filtre à particules 5, et l'état d'endommagement Et_Cat du catalyseur d'oxydation 3. Le coordinateur des modes de combustion 306 fournit l'état du moteur Et_Mot. La structure de couple 307 fournit le couple indiqué Coup_Ind.

On décrit ci-après, en référence aux figures 2 à 6, l'utilisation de ces informations par le superviseur commun 8 pour la mise en œuvre du procédé de commande global des modes de combustion du moteur thermique 2 selon la présente invention.

Dans une étape 601, un modèle 201 (cf. figure 2) estime une charge en soufre Ch_Sox_Cat dans le catalyseur d'oxydation 3 à partir de la consommation de carburant Cons_C et de la consommation d'huile Cons_H du moteur 2. On obtient les émissions de soufre à la sortie du moteur 2 en multipliant ces informations par leurs ratios respectifs de teneur en soufre. Cela permet d'obtenir le débit de soufre Deb_Sox_AmCat en amont du catalyseur 3.

En parallèle, un modèle de désorption 202 utilise la température du catalyseur T_Am_Cat, T_Av_Cat et le débit des gaz d'échappement Deb_G_ech pour calculer le débit de soufre Deb_Sox_AvCat en aval du catalyseur 3. Ce débit Deb_Sox_AvCat est pondéré par l'état d'endommagement Et_Cat du catalyseur 3 ainsi que par le chargement courant en soufre Ch_C_Sox.

La soustraction par le module 203 du débit de soufre Deb_Sox_AmCat en amont du catalyseur 3 et du débit de soufre Deb_Sox_AvCat en aval du catalyseur 3 permet d'obtenir le débit de chargement en soufre Deb_Ch_Cat dans le catalyseur 3. L'intégration de ce dernier débit Deb_Ch_Cat permet de déterminer le chargement de soufre Ch_Sox_Cat dans le catalyseur d'oxydation 3 exprimé en grammes (g) et en grammes par litre (g/L). La charge du catalyseur 3 en soufre Ch_Sox_Cat est envoyée aux règles de décision R décrites plus en détails ci-après.

Dans une étape 602, une estimation de la charge d'hydrocarbures Ch_HC_Cat dans le catalyseur d'oxydation 3 est réalisée via un modèle kilométrique pondéré par des conditions à l'extérieur du véhicule, telles qu'une température extérieure T_Ext et une pression atmosphérique P_Ext, ainsi que par un vieillissement Et_Cat du catalyseur d'oxydation 3.

Dans une étape 603, le superviseur 8 estime la charge en suies Ch_Su_FAP du filtre à particules 5 via la richesse estimée dans les cylindres Rich_G, le débit des gaz et la contrepression mesurée Mes_CP aux bornes du filtre à particules 5. Il est à noter que cette fonction est déjà réalisée par le superviseur connu du filtre à particules 5.

Dans une étape 604, on détermine des critères annexes Crit_A relatifs à l'évaluation d'événements de conduite, tels qu'une durée de purge D_DéSox, D_DéHC du catalyseur d'oxydation 3 et une durée de régénération D_RG_FAP du filtre à particules 5, une efficacité de la purge E_DéSox, E_DÉHC du catalyseur d'oxydation 3 et une efficacité de la régénération E_RG_FAP du filtre à particules 5, une dilution de carburant dans l'huile associée Est_Dil_C, une surconsommation Sur_Cons, un critère de roulage Crit_Roul permettant d'identifier les conditions optimales pour le déclenchement de la purge du catalyseur d'oxydation 3 et/ou la régénération du filtre à particules 5, des distances parcourues Dist_DéHC, Dist_DéSox, Dist_RG_FAP depuis le dernier événement de la purge du catalyseur d'oxydation 3 et de la régénération du filtre à particules 5.

Comme cela est représenté sur la figure 4, une logique de décision gérée par le superviseur 8 permet de comparer, dans une étape 605, la charge en soufre Ch_Sox_Cat et en hydrocarbures Ch_HC_Cat dans le catalyseur d'oxydation 3, la charge en suies Ch_Su_FAP du filtre à particules 5, ainsi que toutes les autres valeurs des critères annexes Crit_A par rapport à différents seuils calibrables, afin de choisir d'effectuer ou pas la purge en soufre du catalyseur d'oxydation 3, la purge en hydrocarbures du catalyseur d'oxydation 3, la régénération du filtre à particules 5.

A cet effet, on définit une pluralité de règles de décision R, chaque règle de décision R comportant une pluralité de seuils associés respectivement à la charge en soufre Ch_Sox_Cat et en hydrocarbures Ch_HC_Cat dans le catalyseur d'oxydation 3, à la charge en suies Ch_Su_FAP du filtre à particules 5, et aux critères annexes Crit_A relatifs à l'évaluation d'événement de conduite. Autrement dit, à une règle donné R est associée une combinaison de seuils particuliers, chaque seuil correspondant à un paramètre composant la règle R. Il sera possible de définir jusqu'à 23 règles de décision R. Ces règles de décision R pourront être enregistrées dans une mémoire, par exemple de type EEPROM's.

Dans un exemple d'implémentation montré sur la figure 4, les seuils des paramètres Ch_Su_FAP, Ch_Sox_Cat, Ch_HC_Cat, Dist_RG_FAP, Dist_DéHC, Dist_DéSox pourront être croissants lorsque l'on se déplace de la gauche vers la droite dans le tableau de règles R tandis que les seuils des critères de roulage Crit_Roul seront décroissants lorsque l'on se déplace de la gauche vers la droite dans le tableau de règles R. Ces règles R permettent ainsi de prendre en compte les différents types de conduites possibles du véhicule. A chaque règle de décision R est associé l'action à mener pour effectuer seul ou en combinaison la purge en soufre du catalyseur d'oxydation 3, sa purge en hydrocarbures, la régénération du filtre à particules 5.

Les modes de combustion pour les purges DéSox, DéHC, RG_FAP sont enclenchés dans une étape 606, si au moins une règle de décision R est vérifiée, c'est-à-dire qu'au moins un seuil de charge en suies Ch_Su_FAP ou en hydrocarbures Ch_HC_Cat ou en soufre Ch_Sox_Cat est vérifié, ainsi que tous les critères Crit_A correspondants ont vérifié leurs seuils respectifs qui sont hébergés dans la règle de décision R associée.

Ainsi, par exemple, dans le cas où la charge en soufre Ch_Sox_Cat est supérieure à son seuil respectif et que les autres critères Crit_A ont vérifié leurs seuils respectifs calibrés d'une des règles R gérées par le superviseur 8, alors le superviseur 8 déclenche un mode de combustion de type "RG FAP niveau 1 " (RG_FAP_1) par injection de carburant vers la ligne d'échappement 1 pour atteindre une température comprise entre 300°C et 400°C afin d'activer le catalyseur 3, puis un mode de combustion de type "RG FAP niveau 2" (RG_FAP_2) pour augmenter progressivement la température des gaz à l'échappement jusqu'à 600°C environ au niveau du catalyseur 3. Cela permet de relarguer le soufre stocké dans celui-ci de façon contrôlée afin d'éviter des fumées blanches à la sortie de l'échappement 1 (fumées qui sont produites si le relargage de soufre n'est pas maîtrisé). Cela permet également de garantir que les propriétés de catalyse du catalyseur 3 ne sont pas dégradées. Les règles R de décisions sont ordonnées, et avantageusement, par ordre croissant, les premières règles visent idéalement une purge en hydrocarbures DéHC suivie d'une régénération RG_FAP du filtre à particules 5 avec une purge en soufre DéSox du catalyseur d'oxydation. Les règles suivante3 sont avantageusement établies de telle manière que la purge en soufre DéSox du catalyseur 3 soit réalisée de façon synchronisée avec la régénération RG_FAP du filtre à particules 5 et les dernières règles étant établies de manière à prioriser et séparer la régénération RG_FAP du filtre à particules 5, la purge en soufre. Toutes les règles sont testées, et la première règle vérifiée selon l'ordre est retenue et appliquée.

Par ailleurs, dans le cas où la charge d'hydrocarbures Ch_HC_Cat est supérieure à son seuil respectif et que les autres critères Crit_A ont vérifié leurs seuils respectifs calibrés d'une des règles R gérées par le superviseur 8, alors le superviseur 8 déclenche le mode de combustion de type "RG FAP niveau 1". Ce mode de combustion permet d'élever la température des gaz à l'échappement jusqu'à 300°C - 400°C au niveau du catalyseur 3, ce qui permet d'oxyder les hydrocarbures stockés et donc de purger le pain catalytique. Cela évite également les surcharges d'hydrocarbures qui peuvent provoquer des pics d'exotherme trop sévères (risque d'endommagement du pain catalytique).

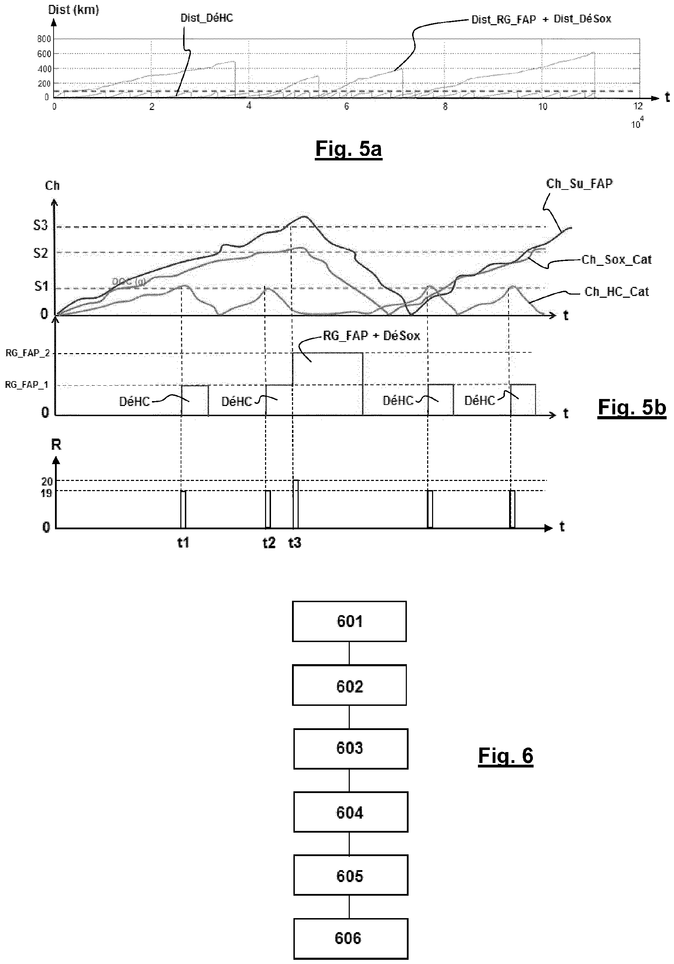

Sur la figure 5a, la courbe référencée "Dist_RG_FAP + Dist_DéSox" représente la distance entre les purges en suies RG_FAP du filtre à particules 5 et en soufre DéSox du catalyseur d'oxydation 3 qui sont synchronisées. Il en ressort que ces deux purges sont lancées simultanément à un intervalle compris entre 400 km et 600 km environ.

La courbe référencée "Dist_DéHC" représente la distance entre les purges en hydrocarbures DéHC du catalyseur d'oxydation 3. Il en ressort que les purges en hydrocarbures sont réalisées à une fréquence plus élevée, notamment tous les 75 km environ.

La figure 5b illustre un exemple de déclenchement des différents modes de combustion par le superviseur 8 lors d'une simulation de roulage.

Plus précisément, à l'instant t1, le niveau de chargement en hydrocarbures Ch_HC_Cat dans le catalyseur 3 dépasse un seuil d'hydrocarbures S1, tandis que les conditions de roulage du véhicule sont favorables au lancement d'une purge des hydrocarbures DéHC, c'est-à-dire que les critères annexes Crit_A ont atteint leurs seuils respectifs correspondant à une telle purge. Une règle de décision correspondante R est alors vérifiée, par exemple la règle 19, ce qui a pour effet de déclencher le mode de combustion de type "RG FAP niveau 1" (RG_FAP_1) afin de purger le catalyseur d'oxydation 3 en hydrocarbures (cf. DéHC).

A l'instant t2, la règle 19 est de nouveau vérifiée, ce qui a pour effet de déclencher le mode de combustion de type "RG FAP niveau 1. Puis, à l'instant t3, le niveau de chargement en soufre Ch_Sox_Cat dans le catalyseur 3 et le niveau de chargement en suie Ch_Su_FAP dans le filtre à particules 5 dépassent leur seuil respectif S2, S3, tandis que les conditions de roulage du véhicule sont favorables au lancement d'une purge des suies RG_FAP du filtre à particules 5 et du soufre DéSox du catalyseur 3, c'est-à-dire que les critères annexes Crit_A ont atteint leurs seuils respectifs correspondant à une telle purge. Une règle de décision correspondante R est alors vérifiée, par exemple la règle 20, ce qui a pour effet de déclencher le mode de combustion de type "RG FAP niveau 2" (RG_FAP_2) afin de purger le catalyseur d'oxydation 3 en soufre et le filtre à particules en suies (cf. DéSOX et RG_FAP).

L'exemple présenté fait appel à deux règles (les règles 19 et 20) afin de faciliter la compréhension de l'invention. Toutefois, il est clair que les purges DéSox, DéHC du catalyseur 3 et du filtre à particules RG_FAP pourront être déclenchées et adaptées lorsque d'autres règles R seront vérifiées afin de prendre en compte les différents types de conduites possibles du véhicule.

## Revendications

1. Procédé de commande global de modes de combustion d'un moteur thermique (2), notamment de véhicule automobile, permettant une purge en soufre (DéSox), ou en hydrocarbures (DéHC) d'un catalyseur d'oxydation (3), une régénération (RG_FAP) d'un filtre à particules (5) équipant une ligne d'échappement (1) dudit moteur thermique (2), comportant :
- une étape d'estimation (601) d'une charge en soufre (Ch_Sox_Cat) dans le catalyseur d'oxydation (3),
- une étape d'estimation (602) d'une charge d'hydrocarbures (Ch_HC_Cat) dans le catalyseur d'oxydation (3),
- une étape d'estimation (603) d'une charge en suies (Ch_Su_FAP) du filtre à particules,
- une étape de détermination (604) de critères annexes (Crit_A) relatifs à l'évaluation d'événements de conduite,
- une étape de comparaison (605) de la charge en soufre (Ch_Sox_Cat) et en hydrocarbures (Ch_HC_Cat) dans le catalyseur d'oxydation (3), de la charge en suies (Ch_Su_FAP) du filtre à particules (5), et des critères annexes (Crit_A) à une pluralité de règles de décision (R), chaque règle de décision (R) comportant une pluralité de seuils associés (S1, S2, S3) respectivement à la charge en soufre (Ch_Sox_Cat) et en hydrocarbures (Ch_HC_Cat) dans le catalyseur d'oxydation (3), à la charge en suies (Ch_Su_FAP) du filtre à particules (5), et aux critères annexes (Crit_A) relatifs à l'évaluation d'événement de conduite, et
- une étape de réalisation, par sélection d'un mode de combustion (RG_FAP_1, RG_FAP_2) adapté du moteur thermique (2), de la régénération (RG_FAP) du filtre à particules (5), de la purge en soufre (DéSox) ou de la purge en hydrocarbures (DéHC) du catalyseur d'oxydation (3) en fonction de la règle de décision (R) vérifiée,
**caractérisé en ce que** les règles (R) de décisions sont ordonnées, la première règle vérifiée selon l'ordre est retenue et appliquée, et les règles (R) visent selon leur ordre croissant,
- une purge en hydrocarbures (DéHC) suivie d'une régénération (RG_FAP) du filtre à particules (5) avec une purge en soufre (DéSox) du catalyseur (3),
- une purge en soufre (DéSox) du catalyseur d'oxydation (3) réalisée de façon synchronisée avec la régénération (RG_FAP) du filtre à particules, et
- une purge en soufre (DéSox) seulement, une purge en hydrocarbures (DéHC) seulement, une régénération (RG_FAP) du filtre à particules (5) seulement.

2. Procédé selon la revendication 1, **caractérisé en ce que** l'estimation de la charge en soufre (Ch_Sox_Cat) dans le catalyseur d'oxydation (3) est réalisée d'une part via un modèle d'émissions en soufre (201) dépendant d'une consommation de carburant (Cons_C) et d'une consommation d'huile moteur (Cons_H), et d'autre part via un modèle de désorption de soufre (202) du catalyseur d'oxydation (3) dépendant de la température (T_Am_Cat, T_Av_Cat), d'un vieillissement (Et_Cat) dudit catalyseur d'oxydation (3), d'un chargement courant en soufre (Ch_C_Sox), ainsi que d'un débit des gaz à l'échappement (Deb_G_ech) qui traversent ledit catalyseur d'oxydation (3).

3. Procédé selon la revendication 1 ou 2, **caractérisé en ce que** l'estimation de la charge d'hydrocarbures (Ch_HC_Cat) dans le catalyseur d'oxydation (3) est réalisée via un modèle kilométrique pondéré par des conditions à l'extérieur du véhicule, telles qu'une température extérieure (T_Ext) et une pression atmosphérique (P_Ext), ainsi que par un vieillissement (Et_Cat) dudit catalyseur d'oxydation (3).

4. Procédé selon l'une quelconque des revendications 1 à 3, **caractérisé en ce que** l'estimation de la charge en suies (Ch_Su_FAP) du filtre à particules (5) est réalisée via une richesse estimée (Rich_G) dans des cylindres du moteur thermique (2), un débit des gaz d'échappement (Deb_G_ech) et une contrepression (Mes_CP) mesurée à des bornes du filtre à particules (5).

5. Procédé selon l'une quelconque des revendications 1 à 4, **caractérisé en ce que** les critères annexes (Crit_A) relatifs à l'évaluation d'événements de conduite sont choisis parmi les critères suivants: une durée de purge (D_DéSox, D_DéHC) du catalyseur d'oxydation (3) et une durée de régénération (D_RG_FAP) du filtre à particules (5), une efficacité de la purge (E_DéSox, E_DéHC) du catalyseur d'oxydation (3) et une efficacité de la régénération (E_RG_FAP) du filtre à particules (5), une dilution de carburant dans l'huile associée (Est-Dil_C), une surconsommation (Sur_Cons), un critère de roulage (Crit_Roul) permettant d'identifier les conditions optimales pour le déclenchement de la purge du catalyseur d'oxydation (3) et/ou la régénération du filtre à particules (5), des distances parcourues (Dist_DéHC, Dist_DéSox, Dist_RG_FAP) depuis le dernier événement de la purge du catalyseur d'oxydation (3) et de la régénération du filtre à particules (5).

6. Superviseur commun (8) de filtre à particules (5) et de catalyseur d'oxydation (3) comportant une mémoire stockant des instructions logicielles pour la mise en œuvre des étapes (601, 602, 603, 604, 605, 606) du procédé de commande de modes de combustion (RG_FAP_1, RG_FAP_2) d'un moteur thermique (2) permettant une purge en soufre (DéSox) ou en hydrocarbures (DéHC) d'un catalyseur d'oxydation (3), une régénération (RG_FAP) d'un filtre à particules (5) tel que défini selon l'une quelconque des revendications précédentes.

7. Ensemble moteur comprenant un moteur thermique (2) équipé d'une ligne d'échappement (1) comportant un catalyseur d'oxydation (3) et un filtre à particules (5), **caractérisé en ce qu'**il comprend un superviseur commun selon la revendication précédente.

8. Véhicule automobile, **caractérisé en ce qu'**il comprend un ensemble moteur selon la revendication précédente.

## Patentansprüche

1. Globales Steuerverfahren von Verbrennungsmodi eines Wärmekraftmotors (2) insbesondere eines Kraftfahrzeugs, das eine Schwefelentleerung (DeSox) oder Kohlenwasserstoffentleerung (DéHC) eines Oxidationskatalysators (3), eine Regenerierung (RG_FAP) eines Partikelfilters (5), das einen Abgasstrang (1) des Wärmekraftmotors (2) ausstattet, erlaubt, das Folgendes umfasst:
- einen Schätzungsschritt (601) einer Schwefelcharge (Ch_Sox_Cat) in dem Oxidationskatalysator (3),
- einen Schätzungsschritt (602) einer Kohlenwasserstoffcharge (Ch_HC_Cat) in dem Oxidationskatalysator (3),
- einen Schätzungsschritt (603) einer Russcharge (Ch_Su_FAP) des Partikelfilters,
- einen Bestimmungsschritt (604) von Hilfskriterien (Crit_A) in Zusammenhang mit der Bewertung von Fahrereignissen,
- einen Vergleichsschritt (605) der Schwefelcharge (Ch_Sox_Cat) und Kohlenwasserstoffcharge (Ch_HC_Cat) in dem Oxidationskatalysator (3), der Russcharge (Ch_Su_FAP) des Partikelfilters (5) und der Hilfskriterien (Crit_A) mit einer Vielzahl von Entscheidungsregeln (R), wobei jede Entscheidungsregel (R) eine Vielzahl von Schwellenwerten (S1, S2, S3) umfasst, die jeweils mit der Schwefelcharge (Ch_Sox_Cat) und Kohlenwasserstoffcharge (Ch_HC_Cat) in dem Oxidationskatalysator (3), mit der Schwefelcharge (Ch_Su_FAP) des Partikelfilters (5) und den Hilfskriterien (Crit_A) in Zusammenhang mit der Bewertung von Fahrereignissen assoziiert sind, und
- einen Ausführungsschritt durch Auswahl eines Verbrennungsmodus (RG_FAP_1, RG_FAP_2), der an den Wärmekraftmotor (2) angepasst ist, der Regenerierung (RG_FAP) des Partikelfilters (5) der Schwefelentleerung (DeSox) oder der Kohlenwasserstoffentleerung (DéHC) des Oxidationskatalysators (3) in Abhängigkeit von der geprüften Entscheidungsregel (R),
**dadurch gekennzeichnet, dass** die Entscheidungsregeln (R) geordnet sind, wobei die erste geprüfte Regel gemäß der Reihenfolge berücksichtigt und angewandt wird, und die Regeln (R) gemäß ihrem aufsteigenden Rang abzielen auf:
- eine Kohlenwasserstoffentleerung (DéHC), gefolgt von einer Regenerierung (RG_FAP) des Partikelfilters (5) mit einer Schwefelentleerung (DéSox) des Katalysators (3),
- eine Schwefelentleerung (DéSox) des Oxidationskatalysators (3), die synchronisiert mit der Regenerierung (RG_FAP) des Partikelfilters ausgeführt wird, und
- nur eine Schwefelentleerung (DéSox), nur auf eine Kohlenwasserstoffentleerung (DéHC), nur eine Regenerierung (RG_FAP) des Partikelfilters (5).

2. Verfahren nach Anspruch 1, **dadurch gekennzeichnet, dass** die Schätzung der Schwefelcharge (Ch_Sox_Cat) in dem Oxidationskatalysator (3) einerseits über ein Schwefelemissionsmodell (201), das von einem Kraftstoffverbrauch (Cons_C) und einem Motorölverbrauch (Cons_H) abhängt, und andererseits über ein Schwefeldesorptionsmodell (202) des Oxidationskatalysators (3), das von der Temperatur (T_Am_Cat, T_Av_Cat) abhängt, einer Alterung (Et_Cat) des Oxidationskatalysators (3), einer aktuellen Schwefelcharge (Ch_C_Sox) sowie einem Durchsatz der Gase an dem Auspuff (Deb_G_ech), die den Oxidationskatalysator (3) durchqueren, ausgeführt wird.

3. Verfahren nach Anspruch 1 oder 2, **dadurch gekennzeichnet, dass** die Schätzung der Kohlenwasserstoffcharge (Ch_HC_Cat) in dem Oxidationskatalysator (3) über ein geometrisches Modell ausgeführt wird, das von den Bedingungen außerhalb des Fahrzeugs, wie einer Außentemperatur (T_Ext) und einem Luftdruck (P_Ext) sowie von einer Alterung (Et_Cat) des Oxidationskatalysators (3) gewichtet wird.

4. Verfahren nach einem der Ansprüche 1 bis 3, **dadurch gekennzeichnet, dass** die Schwefelcharge (Ch_Su_FAP) des Partikelfilters (5) über eine geschätzte Reichhaltigkeit (Rich_G) in den Zylindern des Wärmekraftmotors (2), einen Durchsatz der Abgase (Deb_G_ech) und einen Gegendruck (Mes_CP), der an den Anschlüssen des Partikelfilters (5) gemessen wird, ausgeführt wird.

5. Verfahren nach einem der Ansprüche 1 bis 4, **dadurch gekennzeichnet, dass** die Hilfskriterien (Crit_A) in Zusammenhang mit der Bewertung von Fahrereignissen aus den folgenden Kriterien ausgewählt sind: eine Entleerungsdauer (D_DéSox, D_DéHC) des Oxidationskatalysators (3) und eine Regenerierungsdauer (D_RG_FAP) des Partikelfilters (5), eine Effizienz der Entleerung (E_DéSox, E_DéHC) des Oxidationskatalysators (3) und eine Effizienz der Regenerierung (E_RG_FAP) des Partikelfilters (5), eine Kraftstoffverdünnung in dem assoziierten Öl (Est_Dil_C), einen Mehrverbrauch (Sur_Cons), ein Fahrkriterium (Crit_Roul), das es erlaubt, die optimalen Bedingungen für das Auslösen der Entleerung des Oxidationskatalysators (3) und/oder der Regenerierung des Partikelfilters (5) zu identifizieren, zurückgelegte Entfernungen (Dist_DéHC, Dist_DéSox, Dist_RG_FAP) seit dem letzten Entleerungsereignis des Oxidationskatalysators (3) und der Regenerierung des Partikelfilters (5).

6. Gemeinsamer Supervisor (8) für das Partikelfilter (5) und den Oxidationskatalysator (3), der einen Speicher umfasst, der Softwareanweisungen für die Umsetzung der Schritte (601, 602, 603, 604, 605, 606) des Steuerverfahrens von Verbrennungsmodi (RG_FAP_1, RG_FAP_2) eines Wärmekraftmotors (2) speichert, die eine Schwefel- (DeSox) oder eine Kohlenwasserstoffentleerung (DéHC) eines Oxidationskatalysators (3), eine Regenerierung (RG_FAP) eines Partikelfilters (5), wie nach einem der vorstehenden Ansprüche definiert, erlauben.

7. Antriebsaggregat, das einen Wärmekraftmotor (2) umfasst, die mit einem Abgasstrang (1) ausgestattet ist, der einen Oxidationskatalysator (3) und ein Partikelfilter (5) umfasst, **dadurch gekennzeichnet, dass** es einen gemeinsamen Supervisor nach dem vorstehenden Anspruch umfasst.

8. Kraftfahrzeug, **dadurch gekennzeichnet, dass** es ein Antriebsaggregat nach dem vorstehenden Anspruch umfasst.

## Claims

1. A method for overall control of combustion modes of a heat engine (2), in particular of a motor vehicle, permitting a sulphur purge (DeSox), or a purge of hydrocarbons (DéHC) of an oxidation catalyst (3), a regeneration (RG_FAP) of a particle filter (5) equipping an exhaust line (1) of said heat engine (2), comprising:
- an estimation step (601) of a sulphur charge (Ch_Sox_Cat) in the oxidation catalyst (3),
- an estimation step (602) of a charge of hydrocarbons (Ch_HC_Cat) in the oxidation catalyst (3),
- an estimation step (603) of a soot charge (Ch_SU_FAP) of the particle filter,
- a determination step (604) of additional criteria (Crit_A) relating to the evaluation of driving events,
- a comparison step (605) of the sulphur charge (Ch_Sox_Cat) and charge of hydrocarbons (Ch_HC_Cat) in the oxidation catalyst (3), of the soot charge (Ch_Su_FAP) of the particle filter (5), and of the additional criteria (Crit_A) to a plurality of decision rules (R), each decision rule (R) comprising a plurality of associated thresholds (S1, S2, S3) respectively to the sulphur charge (Ch_Sox_Cat) and charge of hydrocarbons (Ch_HC_Cat) in the oxidation catalyst (3), to the soot charge (Ch_Su_FAP) of the particle filter (5), and to the additional criteria (Crit_A) relating to the driving event evaluation, and
- a realization step, by selection of a combustion mode (RG_FAP_1, RG_FAP_2), adapted from the heat engine (2), the regeneration (RG_FAP) of the particle filter (5), the sulphur purge (DéSox) or the purge of hydrocarbons (DéHC) of the oxidation catalyst (3) as a function of the verified decision rule (R),
**characterized in that** the decision rules (R) are ordered, the first verified rule according to the order is retained and applied, and the rules (R) are aimed according to their ascending order at
- a purge of hydrocarbons (DéHC) followed by a regeneration (RG_FAP) of the particle filter (5) with a sulphur purge (DéSox) of the catalyst (3),
- a sulphur purge (DéSox) of the oxidation catalyst (3) realized in a synchronized manner with the regeneration (RG_FAP) of the particle filter, and
- a sulphur purge (DeSox) only, a purge of hydrocarbons (DéHC) only, a regeneration (RG_FAP) of the particle filter (5) only.

2. The method according to Claim 1, **characterized in that** the estimation of the sulphur charge (Ch_Sox_Cat) in the oxidation catalyst (3) is realized on the one hand via a model of sulphur emissions (201) depending on a fuel consumption (Cons_C) and a consumption of engine oil (Cons_H), and, on the other hand, via a sulphur desorption model (202) of the oxidation catalyst (3) depending on the temperature (T_Am_Cat, T_Av_Cat), on an ageing (Et_Cat) of said oxidation catalyst (3), on a current sulphur charge (Ch_C_Sox), and also on a flow of the exhaust gases (Deb_G_ech) which pass through said oxidation catalyst (3).

3. The method according to Claim 1 or 2, **characterized in that** the estimation of the charge of hydrocarbons (Ch_HC_Cat) in the oxidation catalyst (3) is realized via a kilometric model weighted by conditions on the exterior of the vehicle, such as an exterior temperature (T_Ext) and an atmospheric pressure (P_Ext), and also by an ageing (Et_Cat) of said oxidation catalyst (3).

4. The method according to any one of Claims 1 to 3, **characterized in that** the estimation of the soot charge (Ch_Su_FAP) of the particle filter (5) is realized via an estimated richness (Rich_G) in cylinders of the heat engine (2), a flow of the exhaust gases (Deb_G_ech) and a counterpressure (Mes_CP) measured at terminals of the particle filter (5) .

5. The method according to any one of Claims 1 to 4, **characterized in that** the additional criteria (Crit_A) relating to the evaluation of driving events are selected from the following criteria: a purge duration (D_DéSox, D_DéHC) of the oxidation catalyst (3) and a regeneration duration (D_RG_FAP) of the particle filter, an efficiency of the purge (E_DéSox, E_DéHC) of the oxidation catalyst (3) and an efficiency of the regeneration (E_RG_FAP) of the particle filter (5), a dilution of fuel in the associated oil (Est_Dil_C), an overconsumption (Sur_Cons), a running criterion (Crit_Roul) permitting identification of the optimum conditions for the triggering of the purge of the oxidation catalyst (3) and/or the regeneration of the particle filter (5), distances covered (Dist_DéHC, Dist_DéSox, Dist_RG_FAP) since the last event of the purge of the oxidation catalyst (3) and of the regeneration of the particle filter (5).

6. A common supervisor (8) of particle filter (5) and oxidation catalyst (3) comprising a memory storing software instructions for the implementation of the steps (601, 602, 603, 604, 605, 606) of the method for controlling combustion modes (RG_FAP_1, RG_FAP_2) of a heat engine (2), permitting a sulphur purge (DeSox) or a purge of hydrocarbons (DéHC) of an oxidation catalyst (3), a regeneration (RG_FAP) of a particle filter (5) as defined according to any one of the preceding claims.

7. An engine assembly including a heat engine (2) equipped with an exhaust line (1) comprising an oxidation catalyst (3) and a particle filter (5), **characterized in that** it includes a common supervisor according to the preceding claim.

8. A motor vehicle, **characterized in that** it includes an engine assembly according to the preceding claim.
